# EUROPEAN PATENT SPECIFICATION

(11) **EP 3 067 289 B1**
(45) Date of publication and mention of the grant of the patent: **07.03.2018**
(21) Application number: 16159516.0
(22) Date of filing: 09.03.2016
(51) Int. Cl.: B65D 19/38, B23P 19/04

(54) **BOTTOM ELEMENT AND METHOD OF A REMOVING A BOTTOM ELEMENT OF A TRANSPORT RECEPTACLE**
SCHÜTTGUTBEHÄLTERSOCKEL UND VERFAHREN ZUM ENTFERNEN EINES SOLCHEN SOCKELS VON EINEM SCHÜTTGUTBEHÄLTER
BASE ET METHODE POUR ENLEVER UNE TELLE BASE D'UN BAC DE STOCKAGE EN VRAC

(30) Priority: 10.03.2015 US 201562130914 P; 03.03.2016 US 201615059966
(43) Date of publication of application: 14.09.2016
(73) Proprietor: Orbis Corporation, Oconomowoc Wisconsin 53066 (US)
(72) Inventor: SHEPARD, Christopher, Carrington, Oconomowoc, WI 53066 (US); BANIK, Joachim, Oconomowoc, WI 53066 (US)
(74) Representative: Roberts, Gwilym Vaughan

(56) References cited:
- WO-A1-96/17783
- DE-A1- 4 308 580
- GB-A- 2 166 708

## Description

### FIELD OF THE INVENTION

The present invention is generally directed towards a system and method for repairing a lower portion of a bulk bin base, pallet or similar structure.

### DESCRIPTION OF THE PRIOR ART

Plastic bulk bin containers, pallets and other similar transport receptacles typically include bottom elements, such as runners, stringers or feet that often become damaged or worn before other components of the receptacle. Theoretically, it is more cost effective to replace such bottom elements than it is to replace the entire receptacle.

While certain receptacles are designed for removal and replacement of the bottom element, they do so at a cost. This may include the use of unsuitable and/or expensive materials, such as metal fasteners. The cost could also be the need to have expensive custom parts or tools that require special training.

Documents WO9617783A1 and GB2166708A disclose a bottom element for ease of removal from a container assembly with an upper element, the assembly being enabled by a connector on the bottom element presenting tangs extending upwardly in the continuation of the body of the connector in the mating direction.

Document DE4308580A1 discloses a machine head to repair damage pallets or containers using a rotationally drivable saw blade.

The present invention provides a cost effective system and method for removing and replacing a bottom element that does not require unsuitable materials, custom parts or tools. The present invention is described below and shown in the Figures.

### SUMMARY OF THE INVENTION

The present system and method is directed to removal of a bottom element of a plastic transport receptacle for goods, such as pallets or bulk bin containers. However, unlike prior systems, the present invention allows for a secure connection between top and bottom elements of the plastic transport receptacle. The system and method uses only features that are integrally formed in bottom and top components and therefore does not require any additional fasteners or other components that would increase cost. Additionally, the system and method only require standard tools for disassembly that are readily available at almost any hardware store and require only a minimal amount of user training. Use of the system and method makes it very unlikely that the top part (which is the one that is not replaced) will get damaged, since no impact tool is needed for disassembly.

In accordance with one embodiment of the invention, a method of removing a bottom element of a plastic transport receptacle is provided. The method comprises the steps of providing a plastic transport receptacle having at least a first bottom element and at least a first upper element. The bottom element includes a first generally cylindrical bottom snap-fit member connected to the bottom element by a plurality of ribs, and the upper element includes a first generally cylindrical upper snap-fit member configured to mate with the first bottom snap-fit member. The method further includes sawing through the ribs connecting the first bottom snap-fit member to the first bottom element with a hole saw and removing the first bottom element from the first upper element. The method also includes cutting the first bottom snap-fit member from the first upper snap-fit member. The method can be repeated for each set of snap-fit members connecting the bottom element to the upper element.

The transport receptacle can be a bulk bin container, pallet or other similar receptacle for transporting items. The bottom element can be a runner, full stringer, foot or cap, or other similar elements used for transport receptacles.

The bottom snap-fit member preferably includes a plurality of male snap-fit fingers and the upper snap-fit member includes female snap-fit fingers. This can be reversed.

Preferably, the first bottom element includes a circular opening for accessing the ribs connecting the first bottom snap-fit member to the first bottom element with the hole saw.

In accordance with another embodiment of the present invention, a bottom element connection for ease of removal from an upper portion of a transport receptacle is provided. The bottom element comprises a first bottom snap-fit member in the bottom element having a generally central portion connected to the bottom element by a plurality of horizontally extending ribs. The central portion has a plurality of upwardly extending fingers for engagement with the upper snap-fit member of the upper portion of the transport receptacle. The central portion can have a generally cylindrical shape. The bottom element also includes an opening in a lower surface of the bottom element providing access for a saw to the horizontal ribs. The opening can be sized and shaped (e.g., circular) to act as a guide for a hole saw.

Further aspects of the invention are disclosed below and shown in the Figures.

### BRIEF DESCRIPTION OF THE DRAWINGS

To understand the present invention, it will now be described by way of example, with reference to the accompanying drawings in which:
FIGURE 1 is a perspective view of a bottom of a base of a bulk bin container with three runners or stringers;
FIGURE 2 is a close-up perspective view of a corner of the base of FIGURE 1 showing a portion of one of the runners;
FIGURE 3 is a top view of a portion of the base of FIGURE 1;
FIGURE 4 is a cross-sectional view of a snap-fit member in the runner and a snap-fit member in the base connecting the runner to the base;

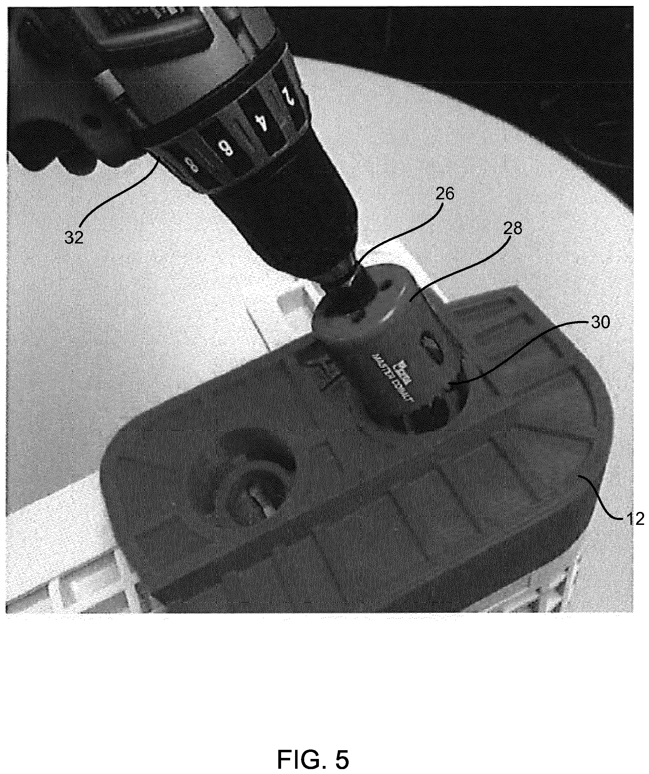

FIGURE 5 is a perspective view showing a hole saw being used to cut the ribs of the snap-fit member of the runner; and,
FIGURE 6 is a perspective view showing a cutter tool being used to remove the fingers of the snap-fit element of the runner from the snap-fit element of the base.

### DETAILED DESCRIPTION

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

The system and method of the present invention is utilized with large plastic storage and transport receptacles, like plastic bulk bins and pallets. Such systems typically utilize bottom elements like runners, stringers, feet or caps. These bottom elements are subject to wear and damage. The present system and method provide a means for easily removing a bottom element (to enable replacement) without requiring expensive tools or custom features.

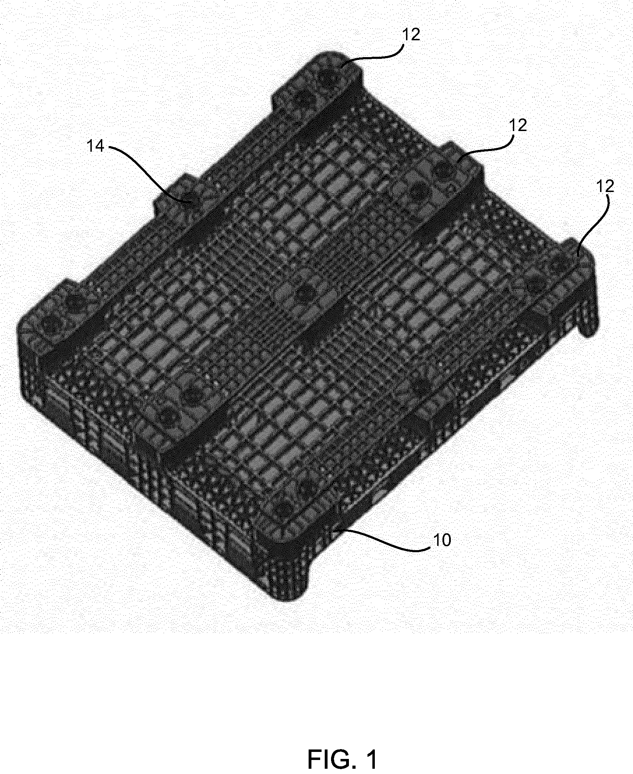

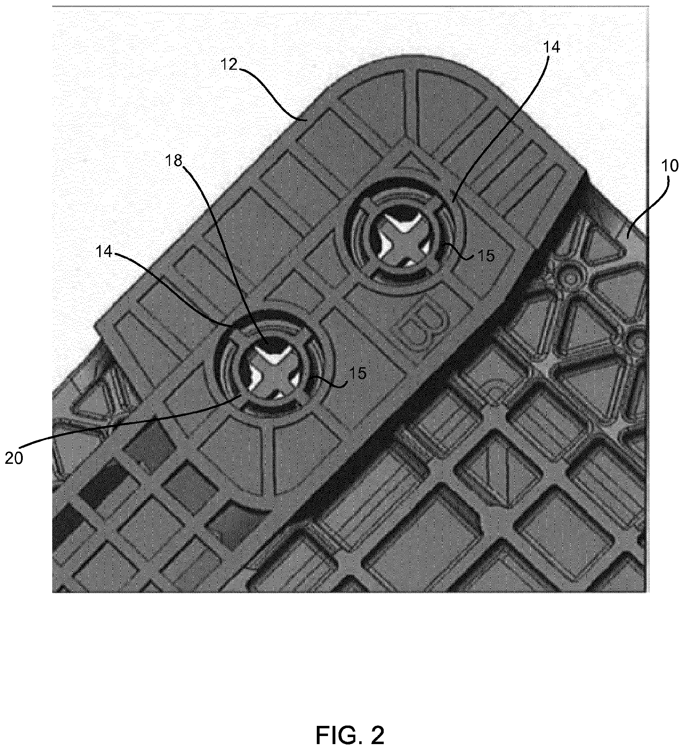

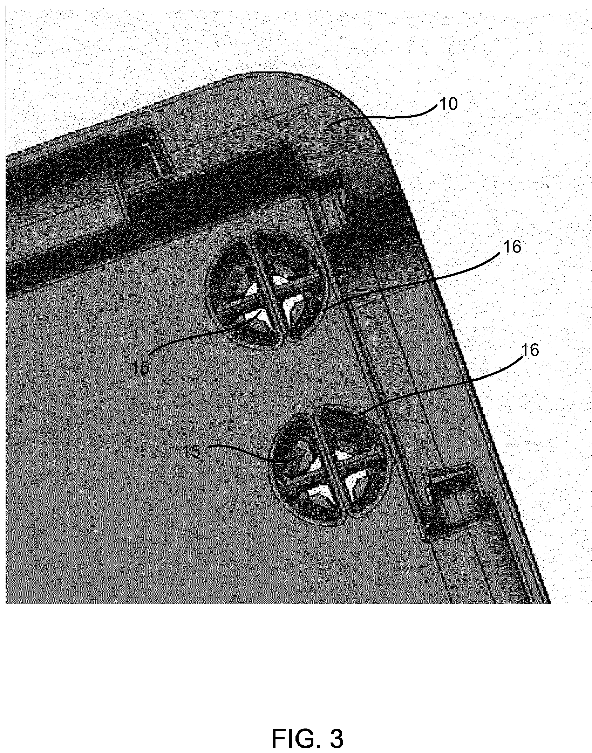

Figure 1 shows a bottom view of a base portion 10 of a bulk bin container. Three runners 12 are connected to the bottom surface of the base 10 by a plurality of sets of corresponding bottom snap-fit members 14 in the runners 12, and upper snap-fit members 16 in the base 10. The bottom snap-fit members 14 interlock with upper snap-fit members 16. As shown in the close up views of Figures 2 and 3, each of the snap-fit members 14, 16 has a generally circular opening 15 from an outer surface.

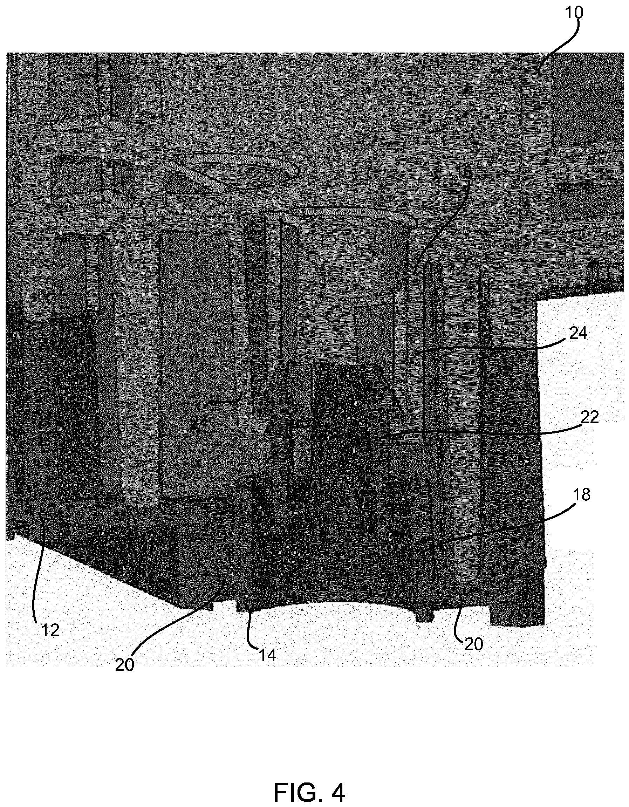

Figure 4 shows a cross-section of one set of the bottom and upper snap-fit members 14, 16 in an interlocked configuration. The bottom snap-fit member 14 has a central portion 18 having a generally cylindrical shape connected to the runner 12 by a plurality of horizontal, radially extending ribs 20. Male snap-fit fingers 22 with barbs at their distal end extend upward from the central cylindrical portion 18 of the snap-fit member 14, and mate with female snap-fit fingers 24 with inwardly projecting flanges at their distal end in the upper snap-fit member 16. While male snap-fit fingers are preferred for the bottom element 12, the fingers can be reversed with the male fingers in the upper snap-fit member and the female fingers in the bottom snap-fit member.

To remove the runner 12 from the base 10, a hole saw 26 is used to cut the ribs 20 connecting the cylindrical portion 18 of the bottom snap-fit member 14 to the runner 12. This is done for each set of snap-fit members 14, 16. The hole saw 26 includes a saw blade 28 having an annular (i.e., ring) or cylindrical shape with an outer edge having teeth 30. The saw blade 28 has a diameter that aligns the teeth with the ribs 20 when inserted into the opening 15 in the runner. The saw blade 28 is powered by a drill 32 (in this case a handheld power drill).

The opening(s) 15 in the bottom element 12 are sized to act as a guide for the blade 28 of the hole saw 26. Accordingly, a pilot drill is not required.

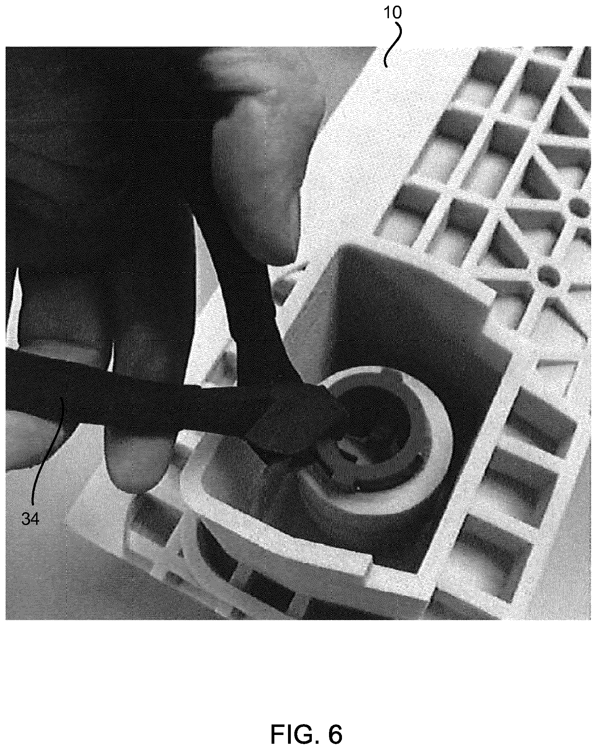

Once the ribs 20 have been cut for each set of snap-fit members, the runner 12 can be removed from the base 10. This leaves the fingers 22 of the bottom snap-fit member 14 interlocked with fingers 24 of the upper snap-fit member 16. As shown in Figure 6, a standard side cutter tool 34 is used to remove the fingers 22 of the bottom snap-fit member 14. Again, this is done for each set of snap-fit members 14, 16.

Again, while shown with a base portion of a bulk container, the invention is suitable for pallets and other similar transport receptacles. Additionally, the invention can be used with stringers, feet or caps or other similar elements as the bottom element.

Many modifications and variations of the present invention are possible in light of the above teachings. It is, therefore, to be understood within the scope of the appended claims the invention may be protected otherwise than as specifically described.

## Claims

1. A method of removing a bottom element (10) of plastic transport receptacle comprising the steps of:
providing a plastic transport receptacle having at least a first bottom element (10) and at least a first upper element, wherein the bottom element includes a first generally cylindrical bottom snap-fit member (14) connected to the bottom element by a plurality of ribs (20), and the upper element includes a first generally cylindrical upper snap-fit member (16) configured to mate with the first bottom snap-fit member;
sawing through the ribs connecting the first bottom snap-fit member to the first bottom element with a hole saw (26);
removing the first bottom element from the first upper element; and,
cutting the first bottom snap-fit member from the first upper snap-fit member.

2. The method of claim 1 wherein the plastic receptacle is a pallet.

3. The method of claim 1 wherein the plastic receptacle is a bulk bin container.

4. The method of claim 1 wherein the first bottom element is a runner.

5. The method of claim 1 wherein the first bottom element is a full stringer.

6. The method of claim 1 wherein the first bottom element is a foot cap.

7. The method of claim 1 wherein the first generally cylindrical bottom snap-fit member includes a plurality of male snap-fit fingers.

8. The method of claim 1 wherein the first generally cylindrical bottom snap-fit member includes a plurality of female snap-fit fingers.

9. The method of claim 1 wherein the first bottom element includes a circular opening for accessing the ribs connecting the first bottom snap-fit member to the first bottom element with the hole saw.

10. The method of claim 1 further comprising the step of connecting a second bottom element to the upper element of the transport receptacle.

11. The method of claim 1 wherein the first bottom element includes a plurality of bottom snap-fit members connected to the bottom element by ribs, and the upper element includes a corresponding plurality of upper snap-fit members.

12. A bottom element connection for ease of removal comprising:
a bottom element (10) for use with a transport receptacle having an upper portion with a first upper snap-fit member (16);
a first bottom snap-fit member (14) in the bottom element having a generally cylindrically shaped central portion (18) connected to the bottom element by a plurality of horizontally extending ribs (20), an opening (15) in a lower surface of the bottom element providing access for a saw to the horizontal extending ribs (20), **characterized by** the central portion having attached within a plurality of upwardly extending fingers (22) for engagement with the upper snap-fit member (24) of the upper portion of the transport receptacle.

13. The bottom element of claim 12 wherein the transport receptacle is a bulk bin container and the upper portion is a base of the bulk bin container.

14. The bottom element of claim 12 wherein the transport receptacle is a pallet.

15. The bottom element of claim 12 wherein the bottom element is a runner; and optionally wherein the bottom element is a stringer; and optionally wherein the bottom element is a foot; and optionally wherein the opening is circular; and optionally wherein the central portion of the bottom snap-fit member is cylindrical; and optionally wherein the bottom snap-fit member is male.

## Patentansprüche

1. Verfahren zum Entfernen eines unteren Elements (10) eines Kunststofftransportbehälters, umfassend die Schritte:
Bereitstellen eines Kunststofftransportbehälters, der mindestens ein erstes unteres Element (10) und mindestens ein erstes oberes Element aufweist, wobei das untere Element ein erstes allgemein zylindrisches unteres Schnappglied (14) umfasst, das durch eine Mehrzahl von Rippen (20) mit dem unteren Element verbunden ist, und das obere Element ein erstes allgemein zylindrisches oberes Schnappglied (16) umfasst, das als Gegenstück zum ersten unteren Schnappglied ausgebildet ist;
Durchsägen der Rippen, die das erste untere Schnappglied mit dem ersten unteren Element verbinden, mit einer Lochsäge (26);
Entfernen des ersten unteren Elements vom ersten oberen Element; und
Abtrennen des ersten unteren Schnappglieds vom ersten oberen Schnappglied.

2. Verfahren nach Anspruch 1, wobei der Kunststoffbehälter eine Palette ist.

3. Verfahren nach Anspruch 1, wobei der Kunststoffbehälter ein Schüttgutbehälter ist.

4. Verfahren nach Anspruch 1, wobei das erste untere Element eine Kufe ist.

5. Verfahren nach Anspruch 1, wobei das erste untere Element ein kompletter Bodenträger ist.

6. Verfahren nach Anspruch 1, wobei das erste untere Element eine Fußkappe ist.

7. Verfahren nach Anspruch 1, wobei das erste allgemein zylindrische untere Schnappglied eine Mehrzahl von einschnappenden Steckfingern umfasst.

8. Verfahren nach Anspruch 1, wobei das erste allgemein zylindrische untere Schnappglied eine Mehrzahl von einschnappenden Buchsenfingern umfasst.

9. Verfahren nach Anspruch 1, wobei das erste untere Element eine kreisrunde Öffnung für den Zugang der Lochsäge zu den Rippen umfasst, die das erste untere Schnappglied mit dem ersten unteren Element verbinden.

10. Verfahren nach Anspruch 1, ferner umfassend den Schritt: Verbinden eines zweiten unteren Elements mit dem oberen Element des Transportbehälters.

11. Verfahren nach Anspruch 1, wobei das erste untere Element eine Mehrzahl von unteren Schnappgliedern umfasst, die durch Rippen mit dem unteren Element verbunden sind, und das obere Element eine entsprechende Mehrzahl von oberen Schnappgliedern umfasst.

12. Untere Elementverbindung für ein einfaches Entfernen, umfassend:
ein unteres Element (10) zur Verwendung mit einem Transportbehälter, der einen oberen Abschnitt mit einem ersten oberen Schnappglied (16) aufweist;
ein erstes unteres Schnappglied (14) im unteren Element mit einem allgemein zylindrisch ausgeformten Mittelabschnitt (18), der durch eine Mehrzahl von horizontal verlaufenden Rippen (20) mit dem unteren Element verbunden ist,
eine Öffnung (15) in einer unteren Fläche des unteren Elements, die für eine Säge einen Zugang zu den horizontal verlaufenden Rippen (20) bereitstellt, **dadurch gekennzeichnet, dass**
der Mittelabschnitt eine an ihm angebrachte Mehrzahl von aufwärts ragenden Fingern (22) für den Eingriff in das obere Schnappglied (24) des oberen Abschnitts des Transportbehälters aufweist.

13. Unteres Element nach Anspruch 12, wobei der Transportbehälter ein Schüttgutbehälter und der obere Abschnitt ein Sockel des Schüttgutbehälters ist.

14. Unteres Element nach Anspruch 12, wobei der Transportbehälter eine Palette ist.

15. Unteres Element nach Anspruch 12, wobei das untere Element eine Kufe ist; und optional wobei das untere Element ein Bodenträger ist; und optional wobei das untere Element ein Fuß ist; und optional wobei die Öffnung kreisrund ist; und optional wobei der Mittelabschnitt des unteren Schnappglieds zylindrisch ist; und optional wobei das untere Schnappglied ein Steckelement ist.

## Revendications

1. Procédé pour enlever un élément de base (10) d'un réceptacle de transport en plastique comprenant les étapes suivantes :
fournir un réceptacle de transport en plastique ayant au moins un premier élément de base (10) et au moins un premier élément supérieur, l'élément de base comprenant un premier organe d'encliquetage inférieur généralement cylindrique (14) connecté à l'élément de base par une pluralité de nervures (20), et l'élément supérieur comportant un premier organe d'encliquetage supérieur généralement cylindrique (16) configuré pour s'accoupler avec le premier organe d'encliquetage inférieur ;
scier à travers les nervures reliant le premier élément d'encliquetage inférieur au premier élément de base avec une scie emporte-pièce (26) ;
enlever le premier élément de base du premier élément supérieur ; et
découper le premier organe d'encliquetage inférieur du premier organe encliquetage supérieur.

2. Procédé selon la revendication 1, dans lequel le réceptacle en plastique est une palette.

3. Procédé selon la revendication 1, dans lequel le réceptacle en plastique est un réservoir de stockage de produits en vrac.

4. Procédé selon la revendication 1, dans lequel le premier élément de base est une glissière.

5. Procédé selon la revendication 1, dans lequel le premier élément de base est un longeron massif.

6. Procédé selon la revendication 1, dans lequel le premier élément de base est un embout de pied.

7. Procédé selon la revendication 1, dans lequel le premier organe d'encliquetage inférieur généralement cylindrique comporte une pluralité de doigts d'encliquetage mâles.

8. Procédé selon la revendication 1, dans lequel le premier organe d'encliquetage inférieur généralement cylindrique comporte une pluralité de doigts d'encliquetage femelles.

9. Procédé selon la revendication 1, dans lequel le premier élément de base comporte une ouverture circulaire pour accéder aux nervures reliant le premier organe d'encliquetage inférieur au premier élément de base avec la scie emporte-pièce.

10. Procédé selon la revendication 1, comprenant en outre l'étape consistant à relier un deuxième élément de base à l'élément supérieur du réceptacle de transport.

11. Procédé selon la revendication 1, dans lequel le premier élément de base comprend une pluralité d'organes d'encliquetage inférieurs reliés à l'élément de base par des nervures, et l'élément supérieur comporte une pluralité correspondante d'organes d'encliquetage supérieurs.

12. Connexion d'un élément de base pour une facilité d'enlèvement, comprenant :
un élément de base (10) destiné à être utilisé avec un réceptacle de transport ayant une partie supérieure avec un premier organe d'encliquetage supérieur (16) ;
un premier organe d'encliquetage inférieur (14) dans l'élément de base, ayant une portion centrale de forme généralement cylindrique (18) reliée à l'élément de base par une pluralité de nervures s'étendant horizontalement (20), une ouverture (15) dans une surface inférieure de l'élément de base fournissant l'accès d'une scie aux nervures s'étendant horizontalement (20), **caractérisée en ce que** la portion centrale présente une pluralité de doigts s'étendant vers le haut (22) attachés à celle-ci, destinés à s'engager avec l'organe d'encliquetage supérieur (24) de la portion supérieure du réceptacle de transport.

13. Élément de base selon la revendication 12, dans lequel le réceptacle de transport est un réservoir de stockage de produit en vrac et la portion supérieure est une base du réservoir de stockage de produit en vrac.

14. Élément de base selon la revendication 12, dans lequel le réceptacle de transport est une palette.

15. Élément de base selon la revendication 12, dans lequel l'élément de base est une glissière ; et en option dans lequel l'élément de base est un longeron ; et en option dans lequel l'élément de base est un pied ; et en option dans lequel l'ouverture est circulaire ; et en option dans lequel la portion centrale de l'organe d'encliquetage inférieur est cylindrique ; et en option dans lequel l'organe d'encliquetage inférieur est mâle.
